(19) Europäisches Patentamt
European Patent Office
Office européen des brevets

(11) EP 0 550 332 B1

(12) **FASCICULE DE BREVET EUROPEEN**

(45) Date de publication et mention de la délivrance du brevet:
**21.05.1997 Bulletin 1997/21**

(51) Int. Cl.$^6$: **C04B 12/00**

(21) Numéro de dépôt: **92403544.7**

(22) Date de dépôt: **23.12.1992**

(54) **Résines minérales et leur procédé de préparation**

Anorganische Harze und Verfahren zu ihrer Herstellung

Inorganic resins and process for their preparation

(84) Etats contractants désignés:
**BE DE FR GB IT NL SE**

(30) Priorité: **03.01.1992 FR 9200012**

(43) Date de publication de la demande:
**07.07.1993 Bulletin 1993/27**

(73) Titulaire: **SOCIETE NATIONALE DES POUDRES ET EXPLOSIFS**
**F-75181 Paris Cédex 04 (FR)**

(72) Inventeurs:
- **Neel, Ludovic**
  **F-76490 Villequier (FR)**
- **Douy, André**
  **F-45160 Olivet (FR)**

(74) Mandataire: **Pech, Bernard et al**
**Sté Nationale des Poudres et Explosifs**
**12, quai Henri IV**
**75181 Paris Cédex 04 (FR)**

(56) Documents cités:
**WO-A-82/00816**
- **CHEMICAL ABSTRACTS, vol. 102, no. 10, Mars 1985, Columbus, Ohio, US; abstract no. 83429v, M. SYCHEV ET AL. 'DEVELOPMENT AND STUDY OF MATERIALS BASED ON ALUMINOSILICATE BINDER' page 290 ;**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 550 332 B1

## Description

L'invention concerne de nouvelles résines minérales à base d'alumino-silicates alcalins et leur procédé de préparation. Elle concerne en particulier des résines qui durcissent à basse température et forment des matrices minérales qui sont très stables dans le temps et aux températures élevées. Elles sont très utiles par conséquent comme liants pour la fabrication de matériaux à haute stabilité thermique.

Des résines minérales à base d'alumino-silicates alcalins ont été décrites (demandes de brevet français FR 2 489 291 et 2 659 319) mais les matériaux fabriqués au moyen de ces résines présentent des propriétés mécaniques faibles dès que la température dépasse 200°C. Si on souhaite les utiliser comme barrières antifeu, les gradients thermiques importants qui se produisent en leur sein provoquent également dès 200°C des fissurations ou des déformations. Il est, par conséquent, nécessaire de leur adjoindre des renforts en surface. De plus à partir de 750°C, les résines se ramollissent et les matériaux s'affaissent alors rapidement. On a aussi constaté que ces matériaux se modifiaient au cours du temps même à température ambiante. Des fissures apparaissent ainsi que des efflorescences en surface qui montrent que les résines ne sont pas stables chimiquement. D'autre part certains composés utilisés pour préparer les résines, tels que la silice thermique, ont des propriétés très variables suivant la source d'approvisionnement et il est alors difficile d'obtenir des résines présentant les mêmes caractéristiques au moyen des mêmes formulations.

Un autre désavantage des résines de l'art antérieur est que leur durcissement ne peut être effectué immédiatement ; il est en effet nécessaire de les laisser au repos un certain temps, souvent quelques heures, avant cette opération, ce qui allonge la durée d'obtention des matériaux.

Il existait donc un besoin de nouvelles résines minérales qui ne possèdent pas les inconvénients des résines de l'art antérieur.

L'invention a pour objet de nouvelles résines minérales à base d'alumino-silicates alcalins obtenues de façon simple et rapide à partir de composés facilement disponibles avec des caractéristiques constantes et qui permettent d'obtenir des matériaux stables dans le temps et conservant leurs propriétés mécaniques aux températures supérieures à 200°C.

Les nouvelles résines minérales selon l'invention comprennent à l'état fluide avant durcissement les éléments minéraux dans les proportions suivantes exprimées par leur rapport molaire d'oxydes :

$$3 \leq \frac{SiO_2}{Al_2O_3} \leq 5$$

$$0,1 \leq \frac{SiO_2 + Al_2O_3 + X_2O + E}{H_2O} \leq 0,7$$

$$0,9 \leq \frac{X_2O}{Al_2O_3 + E} \leq 1,6$$

$$0,01 \leq \frac{E}{Al_2O_3} \leq 0,5$$

$X_2O$ représentant un ou plusieurs oxydes alcalins choisis parmi $Na_2O$, $K_2O$ et $Li_2O$,

et E représentant un ou plusieurs oxydes choisis parmi les oxydes des éléments de transition dont l'un des degrés d'oxydation est supérieur ou égal à 3 et les oxydes des éléments bore et phospore. E représente de préférence un ou plusieurs oxydes choisis parmi $Cr_2O_3$, $Mn_2O_7$, $B_2O_3$, $P_2O_5$, $ZrO_2$ et $TiO_2$.

Elles durcissent par réaction interne de type hydrolyse-polycondensation.

La présence des différents éléments minéraux indiqués, et dans ces proportions, donnent aux résines des propriétés nettement améliorées par rapport à celles de l'art antérieur. En particulier leur durcissement est nettement plus rapide et une fois durcies elles forment des matrices qui possèdent une très bonne tenue au vieillissement, une très bonne stabilité dimensionnelle à température élevée et qui pourront être exposées à des températures supérieures à 750°C et pouvant atteindre 1600°C.

Le spectre de diffraction des rayons X de ces résines après durcissement ne présente pas les raies caractéristiques d'un état cristallin, elles sont donc dans un état amorphe. Après frittage par un traitement thermique supérieur à 850°C, elles peuvent être dans un état cristallin.

L'état amorphe des résines selon l'invention montre qu'elles sont différentes des ciments qui sont constitués principalement par des réseaux cristallins hydratés. De plus les molécules d'eau contenues dans les résines de l'invention ne sont pas intégrées dans la structure de leurs réseaux, elles occupent les pores délimités par ces réseaux. Ces molécules d'eau peuvent en partie quitter les résines par simple évaporation ou séchage ou être, si on le souhaite, totalement éliminées à une température voisine de 100°C sans que la structure solide des résines en soit affectée.

D'autre part les oxydes représentés par E ne sont pas contenus dans la résine à l'état de charges qui constitueraient une deuxième phase mais forment avec les autres oxydes alcalins, de silicium et d'aluminium le squelette même de la matrice. En particulier la présence de chrome, de manganèse, de bore et de phosphore minimise le retrait lors d'une première exposition de la matrice à des températures inférieures à 800°C, tandis que la présence de zirconium et de titane conduit à une meilleure stabilité dimensionnelle à haute température.

On a de plus trouvé que lorsque les résines contiennent au moins un élément choisi parmi les éléments de transition dont l'un des degrés d'oxydation est supérieur ou égal à 3, et de préférence au moins un élément choisi parmi les éléments représentés par les oxydes $Cr_2O_3$, $Mn_2O_7$, $ZrO_2$ et $TiO_2$, elles peuvent également contenir l'élément zinc que l'on exprime également dans la suite sous forme d'oxyde. Il se produit alors un effet de synergie et les propriétés des résines sont encore améliorées. En particulier la combinaison des oxydes de zinc et de zirconium dans les résines permet une meilleure tenue de la matrice aux températures voisines de 800°C et au delà et notamment évite sa fusion à ces températures. La combinaison des oxydes de zinc et de chrome améliore quant à elle les propriétés mécaniques.

De préférence le rapport molaire $\frac{ZnO}{E}$ est compris entre ou égal à 0,5 et 6.

Les résines préférées selon l'invention sont celles dont les rapports molaires d'oxydes ont les valeurs suivantes :

$$3,5 \leq \frac{SiO_2}{Al_2O_3} \leq 4,25$$

$$0,3 \leq \frac{SiO_2 + Al_2O_3 + X_2O + E}{H_2O} \leq 0,5$$

$$1,0 \leq \frac{X_2O}{Al_2O_3 + E} \leq 1,45$$

$$0,05 \leq \frac{E}{Al_2O_3} \leq 0,4$$

Un autre objet de la présente invention concerne le procédé de préparation de ces nouvelles résines.

Ce procédé consiste à effectuer un mélange homogène des deux précurseurs suivants préparés séparément :

I ) un précurseur qui est une poudre constituée d'un alumino-silicate obtenu par amorphisation d'une argile 1 : 1 dans laquelle le rapport atomique $\frac{Si}{Al}$ est égal à 1;

II)un précurseur liquide qui est une solution aqueuse à base de silicates alcalins et d'hydroxydes alcalins et comprenant à l'état dissous au moins un élément choisi parmi les éléments de transition dont l'un des degrés d'oxydation est supérieur ou égal à 3, de préférence choisi parmi le chrome, le manganèse, le zirconium et le titane et les éléments bore et phosphore ;

les quantités des différents constituants étant déterminées pour que leurs rapports molaires dans le mélange, exprimés en terme d'oxyde, aient les valeurs suivantes :

$$3 \leq \frac{SiO_2}{Al_2O_3} \leq 5$$

$$0,1 \leq \frac{SiO_2 + Al_2O_3 + X_2O + E}{H_2O} \leq 0,7$$

$$0,9 \leq \frac{X_2O}{Al_2O_3 + E} \leq 1,6$$

$$0,01 \leq \frac{E}{Al_2O_3} \leq 0,5$$

$X_2O$ et E étant définis comme précédemment.

On obtient ainsi une résine suffisamment fluide qui peut être durcie immédiatement.

Lorsque les résines contiennent l'élément zinc, celui-ci est ajouté et dissous dans le précurseur liquide.

Le rapport molaire $\frac{ZnO}{E}$ est de préférence compris entre ou égal à 0,5 et 6.

Selon un procédé préféré les rapports molaires dans le mélange obtenu ont les valeurs suivantes :

$$3,5 \leq \frac{SiO_2}{Al_2O_3} \leq 4,25$$

$$0,3 \leq \frac{SiO_2 + Al_2O_3 + X_2O + E}{H_2O} \leq 0,5$$

$$1,0 \leq \frac{X_2O}{Al_2O_3 + E} \leq 1,45$$

$$0,05 \leq \frac{E}{Al_2O_3} \leq 0,4$$

Les argiles 1 : 1 qui constituent la matière première du précurseur en poudre se trouvent dans le commerce. Il est préférable qu'elles soient finement broyées, et, pour obtenir une meilleure réactivité, on utilise de préférence celles dont les grains ont une dimension inférieure à 5 µm. En général l'argile utilisée est du kaolin et de préférence dont la teneur en kaolinite est supérieure à 70 %.

Les argiles doivent être amorphisées afin de les rendre réactives avec le précurseur liquide. L'amorphisation peut être obtenue selon des procédés connus. Un procédé qui convient bien dans le cadre de la présente invention est le traitement thermique des argiles de préférence à une température supérieure à 600°C. La durée du traitement est fonction de la température. A 700°C cette durée est de l'ordre de quelques heures. A 1000°C quelques secondes peuvent suffire pour obtenir cette amorphisation. Une autre façon de réaliser l'amorphisation des argiles consiste à les disperser dans des

acides forts et concentrés tels que l'acide chlorhydrique, l'acide sulfurique ou l'acide nitrique. On peut effectuer successivement plusieurs traitements d'amorphisation différents. Lorsqu'on effectue les deux traitements précédents on préfère généralement réaliser le traitement à l'acide avant le traitement thermique. L'amorphisation des argiles peut être constatée par l'examen de leurs spectres de diffraction aux rayons X dans lesquels ne doit plus apparaître le spectre de cristallisation de la kaolinite.

Le précurseur liquide doit contenir $H_2O$ liquide et en solution au moins un alcalin choisi parmi le sodium, le potassium et le lithium, le silicium et au moins un élément choisi parmi les éléments de transition dont l'un des degrés d'oxydation est supérieur ou égal à 3 et les éléments bore et phosphore. De préférence l'élément est choisi parmi le chrome, le manganèse, le bore, le phosphore, le zirconium et le titane.

Afin d'obtenir un précurseur liquide stable il est nécessaire d'une part que tous les constituants soient bien dissous pour former une solution. Cet état dissous est également nécessaire pour que ces constituants puissent former avec les autres constituants du précurseur en poudre le squelette de la résine. D'autre part le précurseur liquide ne doit pas être trop visqueux afin de pouvoir être mélangé avec le précurseur en poudre et afin d'obtenir une résine coulable qui puisse servir à l'imprégnation de charges ou de fibres. De préférence la viscosité du précurseur liquide est inférieure ou égale à 10 poises.

On prépare généralement d'abord une solution aqueuse alcaline de silicate alcalin. La solution aqueuse alcaline est obtenue au moyen des hydroxydes alcalins, NaOH, KOH et/ou LiOH. Pour obtenir une dissolution rapide et complète des silicates on emploie une quantité importante d'hydroxydes alcalins. Il est connu qu'une solution aqueuse alcaline de silicates alcalins est stable si le rapport molaire

$$\frac{SiO_2}{X_2O}$$

est inférieur ou égal à 4. Les silicates qui conviennent bien selon l'invention sont le silicate de sodium et le silicate de potassium.

Selon une variante préférée de l'invention la solution aqueuse alcaline de silicate est une solution d'hydroxyde de potassium et de silicate de potassium.

On introduit ensuite dans la solution précédemment décrite le ou les éléments de transition, de préférence le chrome, le manganèse, le zirconium et/ou le titane, et/ou le ou les éléments bore et/ou phosphore, et éventuellement le zinc, en les dissolvant totalement et de façon à ce que la solution soit stable, au moyen d'au moins une de leurs formes et/ou d'au moins un de leurs composés, capables de se dissoudre dans un milieu aqueux et alcalin tels que par exemple leurs oxydes, sels, acides ou hydroxydes.

Le chrome et le manganèse sont généralement ajoutés au moyen de leurs sels solubles tels que par exemple les nitrates et les sulfates. Pour le bore et le phosphore on utilise les acides solubles ou les sels solubles tels que ceux avec un alcalin. Les acides de ces deux éléments forment quelquefois des précipités mais ils disparaissent par simple agitation. Pour des teneurs supérieures à 10 % en poids de ces acides dans la solution sa viscosité devient importante. Un léger chauffage de la solution permet de revenir à une viscosité acceptable.

On peut ajouter dans la solution le zirconium au moyen des sels de zirconium ou de zirconyle mais leur dissolution n'est généralement que partielle si on les utilise en grande quantité. On préfère employer l'hydroxyde de zirconium.

Le titane peut être introduit au moyen d'un oxyde de titane soluble. Les sels solubles de titane conviennent bien.

Le zinc peut être ajouté sous forme de sels solubles en évitant l'apparition d'un précité mais de préférence il est ajouté sous forme d'oxyde.

On peut également dissoudre d'abord les éléments de transition et/ou bore et/ou phosphore, et éventuellement le zinc, dans la solution aqueuse alcaline et n'introduire le ou les silicates alcalins qu'ensuite.

Le mélange du précurseur liquide et du précurseur en poudre s'effectue à la température ambiante, par exemple au moyen d'un mélangeur à hélice. On obtient rapidement une résine homogène coulable. Cette résine peut ensuite être durcie sans qu'un temps de repos soit nécessaire. Le durcissement résulte de la réaction qui se produit et qui peut s'apparenter à une réaction d'hydrolyse-polycondensation. On peut faire durcir la résine telle quelle ou bien après l'avoir mélangée avec des charges minérales, métalliques ou organiques ou après avoir imprégné des fibres ou des matériaux constitués de fibres tels que des mats et des tissus.

Le durcissement peut être effectué à une température comprise entre 0° et 150°C. Jusqu'à la température ambiante, voisine de 20°C, il est lent. On préfère chauffer la résine à une température comprise entre 40° et 120°C. Le temps de durcissement varie en fonction de la formulation de la résine, de la température et du mode de chauffage utilisés. Au moyen d'un chauffage classique par apport thermique extérieur, certaines formulations durcissent en moins d'une heure à 80°C. Au moyen d'un chauffage par micro-ondes quelques secondes peuvent suffire.

Il est nécessaire que le durcissement soit réalisé en présence de la totalité de l'eau présente dans la résine. On doit opérer par conséquent en milieu hermétique ou saturé en eau.

Lorsque la réaction de durcissement est très avancée, généralement pour un avancement supérieur à 95 %, on peut la laisser se terminer dans les conditions de température et d'hygrométrie ambiantes, de préférence

après avoir au préalable refroidi le matériau jusqu'à une température voisine de la température ambiante. Un séchage, par exemple en étuve, peut éventuellement être effectué ensuite.

Les résines obtenues après durcissement présentent en surface un aspect glacé qui est très décoratif. Elles pourront, par conséquent, être directement utilisées sans qu'il soit nécessaire de les peindre.

Si l'on souhaite obtenir une matrice très dense qui appartiendra à la catégorie des céramiques denses, on soumet alors la matrice à un traitement thermique à une température comprise entre 800°C et 1000°C. Les dimensions de la matrice ne subissent plus ensuite de retrait, même si elle est soumise à des températures pouvant atteindre 1 600°C.

Les exemples qui suivent illustrent l'invention sans toutefois la limiter.

Exemple 1

On prépare le précurseur en poudre, en effectuant l'amorphisation d'un kaolin du bassin des Charentes par traitement thermique à 800°C pendant 4 heures.

Pour obtenir le précurseur liquide on prépare tout d'abord une solution de base constituée de :

65,6 g d'un silicate de potassium en poudre de formule $K_2O$. $SiO_2$. $3H_2O$,
22,4 g de potasse en pastilles et
100 g d'eau.

On agite et on chauffe le mélange jusqu'à la dissolution complète de tous les constituants solides.

A 100 g de la solution de base obtenue on ajoute 5 g d'acide orthoborique $B(OH)_3$. On agite le mélange et on chauffe jusqu'à l'obtention d'une solution.

On obtient la résine en mélangeant les deux précurseurs dans des proportions telles que le rapport

$$\frac{\text{masse du précurseur liquide}}{\text{masse du précurseur solide}} \text{ soit égal à 2.}$$

Le mélange est homogénéisé par agitation vigoureuse pendant 15 minutes.

Les différents oxydes sont présents dans la résine dans les rapports molaires suivants :

$$\frac{SiO_2}{Al_2O_3} = 4{,}15;$$

$$\frac{K_2O}{Al_2O_3 + B_2O_3} = 0{,}99;$$

$$\frac{Al_2O_3 + SiO_2 + K_2O + B_2O_3}{H_2O} = 0{,}36;$$

$$\frac{B_2O_3}{Al_2O_3} = 0{,}21$$

Le durcissement de la résine est effectué en la coulant dans un moule que l'on ferme hermétiquement et que l'on place dans une étuve à 80°C pendant 4 heures. Le moule est ensuite refroidi jusqu'à la température ambiante et on démoule la pièce. On effectue sur la pièce une diffraction aux rayons X qui montre que la structure minérale est amorphe.

Les autres caractéristiques de la résine durcie sont les suivantes :

Résistance à la compression :
Contrainte ultime à la rupture ($\sigma_R$) = 9 MPa
Module de compression ($E_C$) = 0,4 GPa
Température maximale d'utilisation : 800°C

Evolution dimensionnelle au cours d'un premier chauffage :

Retrait à 600°C : 2,9 %
Retrait à 800°C : 7,5 %
Température de frittage : 690°C

Exemple 2

Le précurseur en poudre est identique à celui de l'exemple précédent.

Préparation du précurseur liquide.

La solution de base de silicate alcalin est identique à celle de l'exemple précédent.

A 100 g de cette solution on ajoute 1,5 g de ZnO en poudre, on agite et on chauffe jusqu'à dissolution complète du ZnO.

On prépare par ailleurs de l'hydroxyde de zirconium par précipitation en milieu basique de nitrate de zyrconyle en solution aqueuse et filtration.

On ajoute ensuite 2 g de l'hydroxyde de zirconium obtenu à 100 g de la solution contenant ZnO obtenue précédemment. On agite et on chauffe pendant quelques minutes jusqu'à l'obtention d'une solution.

On obtient la résine en procédant comme à l'exemple 1 par mélange des deux précurseurs dans les proportions indiquées. Les rapports molaires des oxydes sont les suivants :

$$\frac{SiO_2}{Al_2O_3} = 4{,}22;$$

$$\frac{K_2O}{Al_2O_3 + ZrO_2} = 1{,}06;$$

$$\frac{Al_2O_3 + SiO_2 + K_2O + ZrO_2}{H_2O} = 0{,}36;$$

$$\frac{ZrO_2}{Al_2O_3} = 0,06;$$

$$\frac{ZnO}{ZrO_2} = 1,5$$

La résine est ensuite coulée dans un moule fermé hermétiquement qui est placé en étuve à 80°C pendant 1 h 30. Le moule est ensuite refroidi et la pièce est démoulée.

Caractéristiques de la résine durcie :

Résistance à la compression :

$\sigma_R$ = 12 MPa

$E_C$ = 0,7 GPa

Evolution dimensionnelle au cours d'un premier chauffage :

Retrait à 600°C : 4,5 %

Température de frittage : 885°C

Température de stabilisation : 990°C

Température maximale d'utilisation après stabilisation à 990°C : voisine de 1 600°C.

Exemple 3

Préparation du précurseur en poudre.

On amorphise un kaolin du Massif Armoricain par traitement thermique à 900°C pendant 2 heures.

Préparation du précurseur liquide.

On prépare une solution de base constituée de :

100 g d'eau,

65,6 g de silicate de potassium en poudre,

56 g de potasse en pastilles.

On agite et on chauffe jusqu'à dissolution complète.

A 100 g de cette solution on ajoute 5 g de ZnO en poudre. On agite et on chauffe jusqu'à dissolution complète du ZnO.

On ajoute ensuite à 100 g de la solution obtenue 2 g d'hydroxyde de zirconium préparé comme à l'exemple précédent et on opère comme dans cet exemple.

La résine est obtenue comme à l'exemple 1 par mélange des deux précurseurs dans les proportions indiquées. Les rapports molaires d'oxyde sont les suivants :

$$\frac{SiO_2}{Al_2O_3} = 3,92;$$

$$\frac{K_2O}{Al_2O_3 + ZrO_2} = 1,44;$$

$$\frac{Al_2O_3 + SiO_2 + K_2O + ZrO_2}{H_2O} = 0,43;$$

$$\frac{ZrO_2}{Al_2O_3} = 0,06;$$

$$\frac{ZnO}{ZrO_2} = 4,9$$

La résine est coulée dans un moule hermétiquement fermé qui est placé dans une étuve 1 heure à 80°C. Le moule est refroidi et la pièce est démoulée.

Caractéristiques de la résine durcie :

Evolution dimensionnelle au cours d'un premier chauffage :

Retrait à 600°C : 4,7 %

Retrait à 1 000°C : 11,2 %

Température de frittage : 812°C

Température de stabilisation : 890°C

Température maximale d'utilisation : voisine de 1600°C

Résistance à la compression :

$\sigma_R$ = 39 MPa

$E_C$ = 1,3 GPa

A titre de comparaison, on prépare une résine qui ne fait pas partie de l'invention, dans les mêmes conditions que précédemment, avec un précurseur en poudre tel que décrit dans cet exemple et avec un précurseur liquide constitué uniquement par une solution de base telle que décrite dans cet exemple et qui ne comporte par conséquent ni oxyde de zinc ni hydroxyde de zirconium puis on fait durcir la résine de la même façon que précédemment.

Quelques heures après démoulage des fissures apparaissent dans la pièce.

Le retrait au cours d'un premier chauffage à 900°C est de 15%. La température maximale d'utilisation est voisine de 900°C. Au delà de 900°C la résine se ramollit puis se liquéfie.

Il n'a pas été possible de mesurer la résistance à la compression car la pièce se fissure trop dès qu'on l'usine.

Exemple 4

Le précurseur en poudre est constitué par du kaolin du Massif Armoricain qui a été amorphisé par traitement thermique à 800°C pendant 4 heures.

Préparation du précurseur liquide.

On prépare une solution de base constituée de :

65,6 g de silicate de potassium,

44,8 g de potasse en pastilles,

100 g d'eau.

On chauffe et on agite jusqu'à dissolution complète.

Dans 100 g de cette solution on ajoute 5 g d'acide orthoborique $B(OH)_3$ en poudre. On agite et on chauffe jusqu'à l'obtention d'une solution.

On prépare, par ailleurs, du nitrate de chrome en ajoutant 5 g de carbonate chromique (contenant 50 % en masse de chrome) à 46 g d'acide nitrique concentré de densité 1,41. On agite et on chauffe pour obtenir une solution.

On prend 7 g de la solution de nitrate de chrome obtenue et on l'ajoute à 80 g de la solution contenant du bore préparée précédemment. On agite et on chauffe pour obtenir une bonne homogénéisation.

La résine est obtenue comme à l'exemple 1 par mélange des deux précurseurs dans les proportions indiquées.

Les rapports molaires des oxydes sont les suivants :

$$\frac{SiO_2}{Al_2O_3} = 3{,}64;$$

$$\frac{K_2O}{B_2O_3 + Al_2O_3 + CrO_2O_3} = 1{,}09\ ;$$

$$\frac{Al_2O_3 + SiO_2 + K_2O + B_2O_3 + Cr_2O_3}{H_2O} = 0{,}44;$$

$$\frac{B_2O_3 + Cr_2O_3}{Al_2O_3} = 0{,}17$$

Après durcissement effectué comme à l'exemple 1, les caractéristiques de la matrice sont les suivantes :

Température maximale d'utilisation : 680°C
Retrait à 600°C lors d'un premier chauffage : 2,30 %
Résistance à la compression : $\sigma_R$ = 20 MPa.

A titre de comparaison, on prépare une résine qui ne fait pas partie de l'invention, dans les mêmes conditions que précédemment, avec un précurseur en poudre tel que décrit dans cet exemple et avec un précurseur liquide constitué uniquement par une solution de base telle que décrite dans cet exemple et qui ne comprend par conséquent ni acide orthoborique ni nitrate de chrome.

Puis on fait durcir la résine comme précédemment. Le retrait lors d'un premier chauffage à 600°C est de 4,62 %.

Il n'a pas été possible de mesurer la résistance à la compression car la pièce se fissure trop dès qu'on l'usine.

**Revendications**

1. Résines minérales durcissables à base d'aluminosilicates alcalins caractérisées en ce qu'elles comprennent à l'état fluide avant durcissement les éléments minéraux dans les proportions suivantes exprimées par leur rapport molaire d'oxydes :

$$3 \le \frac{SiO_2}{Al_2O_3} \le 5$$

$$0{,}1 \le \frac{SiO_2 + Al_2O_3 + X_2O + E}{H_2O} \le 0{,}7$$

$$0{,}9 \le \frac{X_2O}{Al_2O_3} \le 1{,}6$$

$$0{,}01 \le \frac{E}{Al_2O_3} \le 0{,}5$$

$X_2O$ représentant un ou plusieurs oxydes alcalins choisis parmi $Na_2O$, $K_2O$ et $Li_2O$,

et E représentant un ou plusieurs oxydes choisis parmi les oxydes des éléments de transition dont l'un des degrés d'oxydation est supérieur ou égal à 3 et les oxydes des éléments bore et phosphore.

2. Résines minérales selon la revendication 1, caractérisées en ce que E représente un ou plusieurs oxydes choisis parmi $Cr_2O_3$, $Mn_2O_7$, $B_2O_3$, $P_2O_5$, $ZrO_2$ et $TiO_2$.

3. Résines minérales selon la revendication 1 ou 2, caractérisées en ce que lorsque les résines contiennent au moins un élément choisi parmi les éléments de transition dont l'un des degrés d'oxydation est supérieur ou égal à 3, elles contiennent également l'élément zinc.

4. Résines minérales selon la revendication 3, caractérisées en ce que la quantité de zinc qu'elles contiennent, exprimée en terme d'oxyde, est telle que le rapport molaire $\frac{ZnO}{E}$ est compris entre ou égal à 0,5 et 6, E étant tel que défini précédemment.

5. Résines minérales selon l'une des revendications précédentes, caractérisées en ce qu'elles sont sous forme durcies.

6. Procédé de préparation des résines minérales selon l'une des revendications 1 à 4, caractérisé en ce qu'on effectue un mélange homogène des deux précurseurs suivants préparés séparément :

I ) un précurseur qui est une poudre constituée

d'un alumino-silicate obtenu par amorphisation d'une argile 1 : 1 dans laquelle le rapport atomique $\frac{Si}{Al}$ est égal à 1 ;

II) un précurseur liquide qui est une solution aqueuse à base de silicates alcalins et d'hydroxydes alcalins et comprenant à l'état dissous au moins un élément choisi parmi les éléments de transition dont l'un des degrés d'oxydation est supérieur ou égal à 3 et les éléments bore et phosphore ;

les quantités des différents constituants étant déterminées pour que leurs rapports molaires dans le mélange exprimés en terme d'oxyde, aient les valeurs suivantes :

$$3 \leq \frac{SiO_2}{Al_2O_3} \leq 5$$

$$0,1 \leq \frac{SiO_2 + Al_2O_3 + X_2O + E}{H_2O} \leq 0,7$$

$$0,9 \leq \frac{X_2O}{Al_2O_{3+E}} \leq 1,6$$

$$0,01 \leq \frac{E}{Al_2O_3} \leq 0,5$$

$X_2O$ et E étant tels que définis précédemment.

**7.** Procédé selon la revendication 6, caractérisé en ce que le silicate et l'hydroxyde alcalin contenus dans la solution aqueuse sont le silicate et l'hydroxyde de potassium.

**8.** Procédé selon la revendication 6 ou 7, caractérisé en ce que les éléments de transition sont choisis parmi le chrome, le manganèse, le zirconium et le titane.

**9.** Procédé selon l'une quelconque des revendications 6 à 8, caractérisé en ce que lorsqu'au moins un des éléments de transition dont l'un des degrés d'oxydation est supérieur ou égal à 3 est présent dans le précurseur liquide on introduit et on dissout également dans celui-ci l'élément zinc.

**10.** Procédé selon la revendication 9, caractérisé en ce que l'élément zinc est introduit en quantité telle que le rapport molaire $\frac{ZnO}{E}$ est compris entre ou égal à 0,5 et 6, E étant tel que défini précédemment.

**11.** Procédé selon l'une quelconque des revendications 6 à 10, caractérisé en ce que le précurseur liquide a une viscosité inférieure ou égale à 10 poises.

**12.** Procédé selon l'une quelconque des revendications 6 à 11, caractérisé en ce que le précurseur liquide est obtenu en préparant une solution aqueuse de silicates alcalins et d'hydroxydes alcalins et en dissolvant dans cette solution les autres éléments au moyen d'au moins une de leurs formes et/ou d'au moins un de leurs composés, capables de se dissoudre dans un milieu aqueux et alcalin.

**13.** Procédé selon la revendication 6, caractérisé en ce que l'amorphisation de l'argile est obtenue par traitement avec des acides forts et concentrés et/ou par traitement thermique.

**14.** Procédé selon l'une des revendications 6 à 13, caractérisé en ce que l'on fait durcir les résines en présence de la totalité de l'eau qu'elles contiennent, à une température comprise entre 0° et 150°C.

**15.** Procédé selon la revendication 14, caractérisé en ce qu'avant durcissement la résine est mélangée avec des charges minérales, métalliques et/ou organiques ou est utilisée pour imprégner des fibres ou des matériaux constitués de fibres.

**16.** Objet caractérisé en ce qu'il contient une résine selon l'une quelconque des revendications 1 à 5.

## Claims

**1.** Hardenable inorganic resins based on alkali metal alumino-silicates, characterized in that they comprise in the fluid state before hardening inorganic elements in the following proportions expressed by the molar ratio of their oxides :

$$3 \leq \frac{SiO_2}{Al_2O_3} \leq 5$$

$$0.1 \leq \frac{SiO_2 + Al_2O_3 + X_2O + E}{H_2O} \leq 0,7$$

$$0.9 \leq \frac{X_2O}{Al_2O_3 + E} \leq 1.6$$

$$0.01 \leq \frac{E}{Al_2O_3} \leq 0.5$$

$X_2O$ representing one or more alkali metal oxides selected from $Na_2O$, $K_2O$ and $Li_2O$,
and E representing one or more oxides selected from among the oxides of the transition elements of which one of the degrees of oxidation is higher than or equal to 3, and the oxides of the elements boron and phosphorus.

**2.** Inorganic resins according to claim 1, characterized in that E represents one or more oxides selected from $Cr_2O_3$, $Mn_2O_7$, $B_2O_3$, $P_2O_5$, $ZrO_2$ and $TiO_2$.

**3.** Inorganic resins according to claim 1 or 2, characterized in that when the resins contain at least one element selected from the transition elements of which one of the degrees of oxidation is higher than or equal to 3, they also contain the element zinc.

**4.** Inorganic resins according to claim 3, characterized in that the quantity of zinc that they contain, expressed in terms of the oxide, is such that the molar ratio ZnO/E lies between or is equal to 0.5 and 6, E being as previously defined.

**5.** Inorganic resins according to one of the preceding claims, characterized in that they are in the hardened form.

**6.** Method for preparing inorganic resins according to one of claims 1 to 4, characterized in that a homogeneous mixture is prepared of the following two precursors prepared separately :

I) a precursor which is a powder consisting an alumino-silicate obtained by amorphization of a 1:1 clay in which the atomic ratio Si/Al is equal to 1;
II) a liquid precursor which is an aqueous solution based on alkali metal silicates and alkali metal hydroxides and comprising in the dissolved state at least one element selected from among the transition elements of which one of the degrees of oxidation is higher than or equal to 3, and the elements boron and phosphorus;

the quantities of the various constituents being determined so that their molar ratios in the mixture, expressed in terms of the oxide, have the following values

$$3 \leq \frac{SiO_2}{Al_2O_3} \leq 5$$

$$0.1 \leq \frac{SiO_2 + Al_2O_3 + X_2O + E}{H_2O} \leq 0.7$$

$$0.9 \leq \frac{X_2O}{Al_2O_3 + E} \leq 1.6$$

$$0.01 \leq \frac{E}{Al_2O_3} \leq 0.5$$

$X_2$ and E being as previously defined.

**7.** Method according to claim 6, characterized in that the alkali metal silicate and hydroxide contained in the aqueous solution are potassium silicate and hydroxide.

**8.** Method according to claim 6 or 7, characterized in that the transition elements are selected from chromium, manganese, zirconium and titanium.

**9.** Method according to any one of claims 6 to 8, characterized in that when at least one of the transition elements, of which one of the degrees of oxidation is higher than or equal to 3, is present in the liquid precursor, the element zinc is also introduced and dissolved in it.

**10.** Method according to claim 9, characterized in that the element zinc is introduced in a quantity such that the molar ratio ZnO/E lies between or is equal to 0.5 and 6, E being as defined previously.

**11.** Method according to any one of claims 6 to 10, characterized in that the liquid precursor has a viscosity less than or equal to 10 poise.

**12.** Method according to any one of claims 6 to 11, characterized in that the liquid precursor is obtained by preparing an aqueous solution of alkali metal silicates and alkali metal hydroxides and by dissolving other elements in this solution using at least one of their forms and/or at least one of their compounds, capable of dissolving in an aqueous alkaline solution.

**13.** Method according to claim 6, characterized in that amorphization of the clay is obtained by treatment with concentrated strong acids and/or by heat treatment.

**14.** Method according to one of claims 6 to 13, characterized in that the resins are hardened in the presence of all the water they contain, at a temperature of between 0°C and 150°C.

**15.** Method according to claim 14, characterized in that before hardening, the resin is mixed with inorganic, metallic and/or organic fillers or is used to impregnate fibres or materials consisting of fibres.

**16.** Object characterized in that it contains a resin according to any one of claims 1 to 5.

**Patentansprüche**

**1.** Anorganische härtbare Harze auf der Basis von Alkalialuminiumsilicaten, dadurch gekennzeichnet, daß sie in flüssigem Zustand vor der Härtung die anorganischen Elemente in folgenden, durch ihre Oxid-Molverhältnisse ausgedruckten Mengenantei-

len enthalten:

$$3 \leq \frac{SiO_2}{Al_2O_3} \leq 5$$

$$0{,}1 \leq \frac{SiO_2 + Al_2O_3 + X_2O + E}{H_2O} \leq 0{,}7$$

$$0{,}9 \leq \frac{X_2O}{Al_2O_3 + E} \leq 1{,}6$$

$$0{,}01 \leq \frac{E}{Al_2O_3} \leq 0{,}5\ ,$$

wobei bedeuten:

$X_2O$ ein oder mehrere unter $Na_2O$, $K_2O$ und $Li_2O$ ausgewählte Alkalioxide und

E ein oder mehrere Oxide, die unter den Oxiden von Übergangselementen, bei denen eine der Oxidationsstufen mindestens gleich 3 ist, und den Oxiden der Elemente Bor und Phosphor ausgewählt sind.

**2.** Anorganische Harze nach Anspruch 1, dadurch gekennzeichnet, daß E ein oder mehrere unter $Cr_2O_3$, $Mn_2O_7$, $B_2O_3$, $P_2O_5$, $ZrO_2$ und $TiO_2$ ausgewählte Oxide darstellt.

**3.** Anorganische Harze nach Anspruch 1 oder 2, dadurch gekennzeichnet, daß sie, wenn sie mindestens ein Element enthalten, das unter den Übergangselementen ausgewählt ist, bei denen eine Oxidationsstufe mindestens gleich 3 ist, ferner das Element Zink enthalten.

**4.** Anorganische Harze nach Anspruch 3, dadurch gekennzeichnet, daß die in ihnen enthaltene Menge an Zink, ausgedrückt als Oxid, so ist, daß das Molverhältnis $\frac{ZnO}{E}$ der folgenden Bedingung gehorcht: $0{,}5 \leq \frac{ZnO}{E} \leq 6$, wobei E wie oben definiert ist.

**5.** Anorganische Harze nach einem der vorhergehenden Ansprüche, dadurch gekennzeichnet, daß sie in gehärteter Form vorliegen.

**6.** Verfahren zur Herstellung der anorganischen Harze nach einem der Ansprüche 1 bis 4, gekennzeichnet durch homogenes Mischen der nachstehend angegebenen, getrennt hergestellten beiden Precursor:

I) eines Precursors, der ein Pulver darstellt, das aus einem durch Amorphisieren eines 1:1-Tons mit einem Atomverhältnis $\frac{Si}{Al}$ gleich 1 erhaltenen Aluminiumsilicat besteht, und

II) eines flüssigen Precursors, der eine wäßrige Lösung auf der Basis von Alkalisilicaten und Alkalihydroxiden darstellt und in gelöstem Zustand mindestens ein Element enthält, das unter den Übergangselementen, bei denen eine der Oxidationsstufen mindestens gleich 3 ist, sowie Bor und Phosphor ausgewählt ist,

wobei die Mengen der verschiedenen Bestandteile so bestimmt sind, daß ihre für die entsprechenden Oxide ausgedrückten Molverhältnisse im Gemisch folgenden Bedingungen entsprechen:

$$3 \leq \frac{SiO_2}{Al_2O_3} \leq 5$$

$$0{,}1 \leq \frac{SiO_2 + Al_2O_3 + X_2O + E}{H_2O} \leq 0{,}7$$

$$0{,}9 \leq \frac{X_2O}{Al_2O_3 + E} \leq 1{,}6$$

$$0{,}01 \leq \frac{E}{Al_2O_3} \leq 0{,}5\ ,$$

wobei $X_2O$ und E wie oben definiert sind.

**7.** Verfahren nach Anspruch 6, dadurch gekennzeichnet, daß das Alkalisilicat und das Alkalihydroxid, die in der wäßrigen Lösung enthalten sind, Kaliumsilicat und Kaliumhydroxid sind.

**8.** Verfahren nach Anspruch 6 oder 7, dadurch gekennzeichnet, daß die Übergangselemente unter Chrom, Mangan, Zirkonium und Titan ausgewählt sind.

**9.** Verfahren nach einem der Ansprüche 6 bis 8, dadurch gekennzeichnet, daß, wenn mindestens eines der Übergangselemente, bei denen eine der Oxidationsstufen mindestens gleich 3 ist, im flüssigen Precursor vorliegt, ferner auch das Element Zink eingeführt und darin gelöst wird.

**10.** Verfahren nach Anspruch 9, dadurch gekennzeichnet, daß das Element Zink in einer solchen Menge eingeführt wird, daß das Molverhältnis $\frac{ZnO}{E}$ folgender Bedingung genügt: $0{,}5 \leq \frac{ZnO}{E} \leq 6$, wobei E wie oben definiert ist.

**11.** Verfahren nach einem der Ansprüche 6 bis 10, dadurch gekennzeichnet, daß der flüssige Precursor eine Viskosität von höchstens 10 P (1 Pa • s) aufweist.

**12.** Verfahren nach einem der Ansprüche 6 bis 11, dadurch gekennzeichnet, daß der flüssige Precursor durch Herstellung einer wäßrigen Lösung von Alkalisilicaten und Alkalihydroxiden und Lösen der anderen Elemente in dieser Lösung hergestellt wird, wobei die anderen Elemente in mindestens einer ihrer Formen und/oder in Form mindestens einer ihrer Verbindungen, die befähigt sind, sich in einem wäßrigen alkalischen Medium zu lösen, eingesetzt werden.

**13.** Verfahren nach Anspruch 6, dadurch gekennzeichnet, daß die Amorphisierung des Tons durch Behandlung mit starken und konzentrierten Säuren und/oder durch thermische Behandlung vorgenommen wird.

**14.** Verfahren nach einem der Ansprüche 6 bis 13, dadurch gekennzeichnet, daß die Harze in Gegenwart der Gesamtmenge an Wasser, das sie enthalten, bei einer Temperatur im Bereich von 0 bis 150 °C gehärtet werden.

**15.** Verfahren nach Anspruch 14, dadurch gekennzeichent, daß das Harz vor der Härtung mit anorganischen, metallischen und/oder organischen Füllstoffen vermischt oder zur Imprägnierung von Fasern oder aus Fasern bestehenden Materialien verwendet wird.

**16.** Gegenstand, dadurch gekennzeichnet, daß er ein Harz nach einem der Ansprüche 1 bis 5 enthält.